# FASCICULE DE BREVET EUROPEEN

(11) **EP 2 707 233 B1**
(45) Date de publication et mention de la délivrance du brevet: **10.06.2015**
(21) Numéro de dépôt: 12719635.0
(22) Date de dépôt: 26.04.2012
(51) Int. Cl.: B60C 11/12, B60C 11/03

(54) **BANDE DE ROULEMENT COMBINANT INSERTS ET INCISIONS**
LAUFFLÄCHE MIT KOMBINATION AUS EINSÄTZEN UND FEINEINSCHNITTEN
TREAD COMBINING INSERTS AND SIPES

(30) Priorité: 11.05.2011 FR 1154082
(43) Date de publication de la demande: 19.03.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DAYET, Patrick, F-63040 Clermont-Ferrand Cedex 9 (FR); PINEAU, Jacky, F-63040 Clermont-Ferrand Cedex 9 (FR); ABINAL, Richard, F-63040 Clermont-Ferrand Cedex 9 (FR); VILLENEUVE, Bernard, F-63040 Clermont-Ferrand Cedex 9 (FR)
(74) Mandataire: Diernaz, Christian
(86) Numéro de dépôt international: PCT/EP2012/057657
(87) Numéro de publication internationale: WO 2012/152593

(56) Documents cités:
- WO-A1-01/60641
- WO-A1-02/060705
- DE-A1- 1 480 889

## Description

### DOMAINE DE L'INVENTION

La présente invention concerne les bandes de roulement de pneu et notamment les incisions dont peuvent être pourvues ces bandes. Elle concerne également les bandes de roulement comprenant des inserts destinés à former de nouvelles rainures après usure partielle de ces bandes, ces dernières comprenant en outre des incisions selon l'invention.

### ÉTAT DE LA TECHNIQUE

Il est connu de former une bande de roulement ayant une surface de roulement destinée à venir en contact avec une chaussée, cette bande ayant une épaisseur suffisante pour permettre d'obtenir une distance d'usage satisfaisante par usure. Il est connu de pourvoir une bande de roulement d'un pneu destiné à équiper un véhicule de tourisme avec une pluralité de rainures dont la profondeur est appropriée pour que pendant toute la durée d'usage des rainures soient présentes et efficaces. On trouve en combinaison avec ces rainures une pluralité d'incisions qui permettent de générer un grand nombre d'arêtes de matière sans toutefois trop réduire la rigidité de la bande de roulement et sans trop augmenter le volume de creux de cette bande.

Pour obtenir à l'état initial (c'est-à-dire en sortie de moule) un niveau de rigidité approprié tout en assurant une quantité de creux importante en fin de vie afin d'avoir une adhérence sur sol mouillé importante, il a été proposé de générer de nouvelles rainures à partir d'un niveau d'usure en formant à l'intérieur de la bande soit des canaux soit en introduisant à l'intérieur de la bande au moins un insert destiné à former une nouvelle rainure après enlèvement comme cela est, par exemple, décrit dans le document de brevet BE-399026-A.

Dans ce dernier cas, il est intéressant de combiner à la fois la présence d'au moins un insert et d'une pluralité d'incisions dont l'orientation coupe l'orientation de l'insert.

Il a été constaté lors de tests qu'il pouvait se produire des mouvements de matière non vulcanisée pendant l'opération de moulage du pneu ; ces mouvements de matière ne sont pas sans incidence sur la géométrie obtenue des constituants et plus particulièrement des inserts eux-mêmes, pouvant alors conduire à une réduction de la performance du pneu en roulage. Notamment, il a été observé qu'avec l'usure de la bande de roulement le passage de l'incision à la nouvelle rainure formée par l'insert pouvait ne pas être régulier et que cela posait problème.

L'objet de l'invention est de prévenir un tel problème.

### BREF EXPOSÉ DE L'INVENTION

Pour y parvenir, il est proposé une bande de roulement d'un pneu ayant une surface de roulement destinée à venir en contact avec une chaussée, cette bande comprenant au moins une incision s'étendant selon une direction principale D (cette direction est prise sur la surface de roulement de la bande) et de largeur moyenne E, cette incision comprenant dans la direction principale D au moins une partie de faible profondeur HF et au moins une partie d'incision de grande profondeur HG, la profondeur HF étant inférieure à la profondeur HG, chaque partie de faible profondeur et chaque partie de grande profondeur comprenant une région d'extrémité dans la profondeur de la bande, cette bande de roulement comprenant en outre au moins un insert orienté selon une direction différente de la direction principale D de l'incision, cet insert étant disposé entièrement dans l'épaisseur de la bande de manière à être situé radialement à l'intérieur d'une partie d'incision de faible profondeur HF.

Cette bande de roulement est de plus telle qu'au moins la partie d'incision de faible profondeur HF située radialement à l'extérieur de l'insert est pourvue, à sa région d'extrémité - c'est-à-dire la région la plus éloignée de la surface de roulement, d'un élargissement formant un canal de largeur moyenne W, cette largeur moyenne W étant supérieure à la largeur moyenne E de l'incision.

### Définitions :

Un bloc est un élément en relief formé sur une bande de roulement, cet élément étant délimité par des creux ou rainures et comprenant des parois latérales et une face de contact, cette dernière étant destinée à venir en contact avec la chaussée pendant le roulage.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale ou transversale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une découpure désigne soit une rainure soit une incision et correspond à l'espace délimité par des parois de matière se faisant face et distantes l'une de l'autre d'une distance non nulle. Ce qui différencie une incision d'une rainure c'est précisément cette distance ; dans le cas d'une incision, cette distance est déterminée pour permettre la mise en contact des parois se faisant face lors du passage dans le contact avec une chaussée. Cette distance, pour une incision, est en règle générale pour un pneu de véhicule de tourisme au plus égale à 2 millimètres (2 mm). Dans le cas d'une rainure, les parois délimitant cette rainure ne peuvent venir en contact l'une contre l'autre dans les conditions usuelles de roulage. Pour un pneu destiné à un véhicule de tourisme on peut considérer que cette largeur est supérieure à 2 mm.

La direction principale d'une découpure correspond à la direction moyenne passant par les points les plus éloignés des arêtes formées par la découpure sur la surface de roulement de la bande à l'état neuf.

La direction secondaire d'une découpure est définie comme la direction perpendiculaire à la direction principale d'une incision et s'étendant dans l'épaisseur de la bande. Cette direction correspond à la direction selon la profondeur de la découpure.

Une première partie est dite située radialement à l'intérieur d'une seconde partie dès lors que cette première partie est située entre l'axe de rotation du pneu et cette seconde partie.

Grâce à l'invention, on obtient une bande de roulement dont les trajectoires des inserts sont le moins possible perturbées par la pénétration des lames moulant les incisions ayant des directions premières différentes de celles des inserts et ainsi on obtient une bande de roulement dont la performance en usure est régulière. En outre, la transition lors de l'usure de la bande entre l'incision et la nouvelle rainure est améliorée grâce à la disposition selon l'invention.

Selon une variante de l'invention, la bande de roulement selon l'invention est telle que la largeur moyenne du canal W est au moins égale à trois fois la largeur moyenne E de l'incision.

Selon une variante, la bande de roulement selon l'invention est telle que l'incision comprend une partie de profondeur réduite HF encadrée dans la direction principale D par des parties de plus grande profondeur HG.

Selon une variante, la bande de roulement selon l'invention est telle que toutes les incisions surmontant radialement un insert sont pourvues avec un canal de largeur moyenne W sur leurs régions d'extrémité les plus à l'intérieur de la bande de roulement.

Selon une autre variante de l'invention, la bande de roulement est telle que le canal a, vu en coupe, une forme circulaire tronquée de manière à former un fond de canal de géométrie plane ou sensiblement plane, ce fond de canal étant la partie du canal la plus éloignée de la surface de roulement et la plus proche de l'insert.

Selon une variante de l'invention, la bande de roulement est telle qu'il existe une épaisseur de gomme différente de zéro entre la partie d'incision de profondeur réduite et le canal passant sous ladite partie d'incision, cette épaisseur étant au moins égale à la largeur E de l'incision.

De façon avantageuse et cela quelle que soit la variante précédemment décrite, une incision selon l'invention peut présenter en outre une forme générale ayant des ondulations ou des zigzags afin de limiter la réduction de rigidité liée à la présence de cette incision. De même, ces incisions peuvent être inclinées par rapport à la surface de roulement, c'est-à-dire pour ne pas être perpendiculaire à cette surface.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une vue d'un élément de relief d'une bande de roulement selon l'invention comprenant un insert entouré par une incision ;

La figure 2 montre une vue d'un élément de moule pour mouler une variante d'incision dans une bande de roulement selon l'invention ;

La figure 3 montre une vue d'un autre élément de moule pour mouler une variante d'incision dans une bande de roulement selon l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

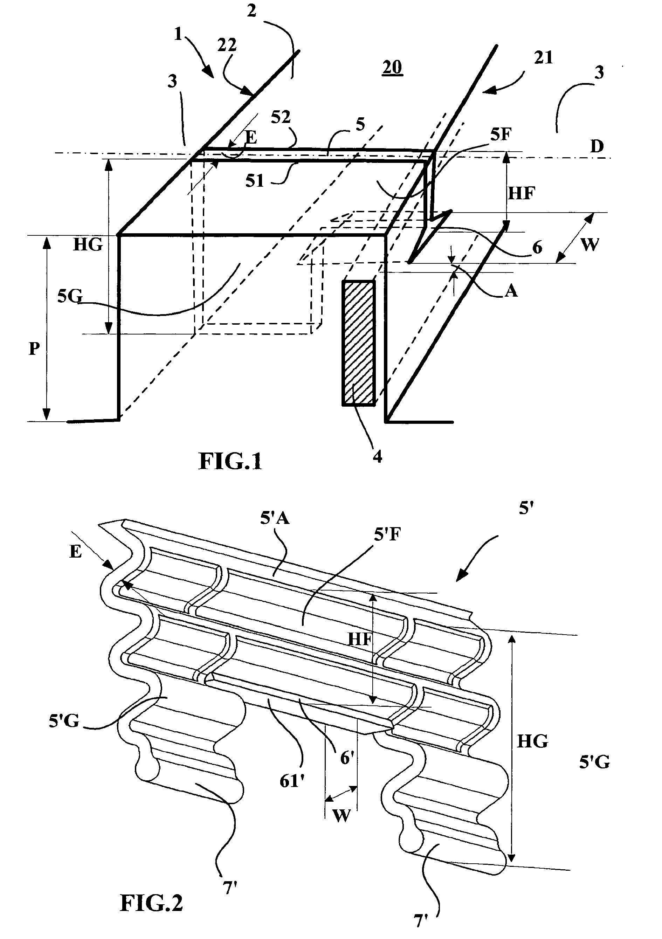

La figure 1 montre une vue d'un élément de relief d'une bande de roulement selon l'invention comprenant un insert entouré avec une incision.

Sur cette figure 1, on voit une partie d'une nervure 2 d'une bande de roulement 1 d'un pneu pour véhicule de tourisme, cette nervure 2 étant délimitée par des rainures 3 d'orientation circonférentielle et de profondeur P. Cette nervure 2 comprend deux faces latérales 21, 22 limitant les rainures circonférentielles et une face de contact 20 destinée à venir en contact avec une chaussée lors du roulage. Les rainures circonférentielles 3 ont une profondeur P - à l'état neuf de la bande, qui correspond sensiblement à la hauteur de matière pouvant être usée en roulage avant d'avoir à changer de pneu. À l'intérieur de cette nervure 2, on voit un insert 4 formé dans un matériau résistant au moulage du pneu et destiné à être enlevé ou à s'éliminer automatiquement en roulage dès lors que l'usure de la bande est appropriée afin de créer de nouvelles rainures s'ouvrant sur la surface de roulement après cette usure partielle. Cet insert 4 est disposé de manière à s'étendre essentiellement dans la direction circonférentielle pour être entièrement contenu dans la nervure 2.

Pour obtenir un effet satisfaisant notamment en motricité, cette nervure 2 comprend en outre une pluralité d'incisions 5 de largeur E - ici égale à 0,6 mm, ces incisions 5 s'étendant perpendiculairement à la face de contact 20 de la nervure 2. Chaque incision 5 forme sur la surface de roulement des arêtes 51, 52 parallèles entre elles ; ces arêtes - entre leurs points les plus éloignés définissent une direction principale de l'incision (notée ici D).

Cette incision 5 est formée de deux parties dans sa direction principale D : une partie de faible profondeur 5F, notée HF, et une partie de plus grande profondeur 5G, notée HG. Dans le cas présent, la profondeur HF de la partie de faible profondeur est égale à la moitié de la profondeur P des rainures circonférentielles 3 tandis que la profondeur HG est sensiblement égale à cette profondeur P des rainures circonférentielles 3.

La partie de faible profondeur 5F comprend une partie d'extrémité 6 élargie par rapport à la largeur E de l'incision, cette partie élargie 6 surmontant radialement l'insert 4 (c'est-à-dire située entre l'insert 4 et la face de contact 20). Dans le cas présenté, la partie élargie 6 a une section de forme triangulaire, l'un des côtés de ce triangle étant parallèle à la direction circonférentielle de l'insert et est de largeur W. Entre cette partie élargie 6 et l'insert 4, il est prévu une quantité de matière d'épaisseur A faible mais non nulle (au moins 0.2 mm et préférentiellement au moins 0.5 mm) pour éviter toute interférence pendant l'opération de moulage de la bande de roulement entre l'insert 4 et l'élément de moulage moulant une incision croisant cet insert (par croisant l'insert, il faut entendre ici que la direction principale D de l'incision 5 est différente de la direction de l'insert).

La figure 2 montre une vue d'un élément de moule 5' pour mouler une variante d'incision dans une bande de roulement selon l'invention. Selon cette variante, cet élément de moule 5' comprend une région d'ancrage 5'A prévue pour être montée dans un moule, cette région d'ancrage étant prolongée par deux parties de hauteur HG (ces parties sont repérées 5'G) et une partie de hauteur HF (cette partie est repérée 5'F), la hauteur HG étant supérieure à la hauteur HF. Les parties de hauteur HG encadrant la partie de hauteur HF.

Cet élément moulant 5' permet le moulage d'une incision comprenant deux parties d'incision de grande profondeur HG encadrant, dans la direction principale de l'incision, une partie d'incision de plus faible profondeur HF.

Par ailleurs, toutes les parties d'incision 5'G et 5'F ont des ondulations dans la direction de leur hauteur (correspondant à la profondeur de l'incision moulée) afin de créer un engrenage mécanique entre les parois en vis-à-vis délimitant ladite incision.

En outre, la partie de profondeur réduite 5'F se termine par une région d'extrémité 6' dont la section transversale est semi circulaire de largeur W et dans le cas présent égale à 3 mm. Cette région d'extrémité 6' comprend une partie plane 61' qui est disposée de manière à être au plus près d'un insert lors d'un moulage de pneu, mais sans le toucher bien entendu. En outre, les autres extrémités des parties de grande profondeur 5'G sont pourvues avec des élargissements 7' de forme circulaire cylindrique pour réduire les concentrations de contraintes localement comme cela est connu.

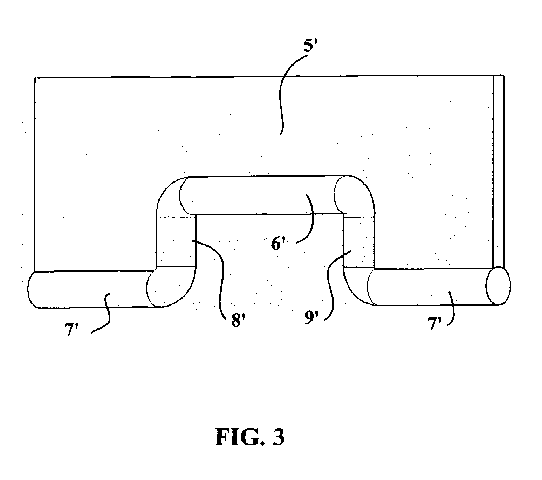

Dans une dernière variante décrite ici, on réalise comme on peut le voir sur la figure 3, une continuité entre les régions d'extrémité des parties de grande hauteur 5'G et celle de faible hauteur 5'F. Les élargissements 7' formés sur les parties de grande hauteur 5'G et l'élargissement 6' formé sur la partie centrale de plus petite hauteur 5'F, sont connectés entre eux par des parties élargies 8' et 9' courant le long du bord intérieur de chaque partie de grande hauteur. Ceci est à la fois favorable en fabrication de l'élément moulant lui même et lors du moulage d'une bande de roulement puisque toutes les parties de l'élément pouvant interférer avec l'insert sont délimitées par des élargissements.

L'invention ayant été décrite de manière générale et au moyen de quelques variantes, il doit être compris qu'elle n'est toutefois pas limitée à ces seules variantes. Il est clair que diverses modifications peuvent y être apportées sans sortir du cadre général de la présente invention telle que revendiquée.

Dans tous les cas présentés, la personne du métier est à même d'adapter la forme de chaque incision, notamment en prévoyant la présence de moyens aptes à limiter les déplacements relatifs d'une face par rapport à la face en vis-à-vis (par exemple en prévoyant la formation de relief interagissant entre eux pour limiter voire bloquer tout mouvement relatif desdites faces).

## Revendications

1. Bande de roulement (1) pour pneu comprenant une surface de roulement (20) destinée à venir en contact avec une chaussée, cette bande comprenant au moins une incision (5) s'étendant selon une direction principale D et de largeur moyenne E, cette bande de roulement comprenant en outre au moins un insert (4) orienté selon une direction différente de la direction principale D de l'incision, cet insert (4) étant disposé entièrement dans l'épaisseur de la bande de manière à être situé radialement à l'intérieur d'une partie d'incision (5F) de faible profondeur HF, cette bande de roulement étant **caractérisée en ce que** cette incision (5) comprenant dans la direction principale D au moins une partie d'incision (5F) de faible profondeur HF et au moins une partie d'incision (5G) de grande profondeur HG, la profondeur HF étant inférieure à la profondeur HG, chaque partie d'incision (5F) de faible profondeur et chaque partie d'incision (5G) de grande profondeur comprenant une région d'extrémité, et **en ce qu'**au moins la partie d'incision (5F) de faible profondeur HF située radialement à l'extérieur de l'insert est pourvue, à sa région d'extrémité, d'un élargissement formant un canal (6) de largeur maximale W, cette largeur maximale W étant supérieure à la largeur moyenne E de l'incision.

2. Bande de roulement pour pneu selon la revendication 1 et dans laquelle la largeur maximale W du canal (6) est au moins égale à trois fois la largeur moyenne de l'incision.

3. Bande de roulement pour pneu selon la revendication 1 ou la revendication 2 et dans laquelle l'incision (5) comprend une partie (5F) de profondeur réduite HF encadrée dans la direction principale D par des parties (5G) de plus grande profondeur HG.

4. Bande de roulement pour pneu selon la revendication 3 et dans laquelle toutes les incisions (5) surmontant radialement un insert (4) sont pourvues avec un canal (6) de largeur moyenne W sur leurs régions d'extrémité les plus à l'intérieur de la bande de roulement.

5. Bande de roulement pour pneu selon l'une des revendications 1 à 4 et dans laquelle le canal (6) a, vu en coupe, une forme circulaire tronquée de manière à former un fond de canal de géométrie plane, ce fond de canal étant la partie du canal la plus éloignée de la surface de roulement (20).

6. Bande de roulement pour pneu selon la revendication 5 et dans laquelle il existe une épaisseur A de gomme différente de zéro entre la partie d'incision (5F) de profondeur réduite et l'insert (4) passant sous ladite partie d'incision, cette épaisseur de gomme étant au moins égale à la largeur E de l'incision (5).

## Patentansprüche

1. Laufstreifen (1) für einen Reifen, der eine Lauffläche (20) enthält, die dazu bestimmt ist, mit einer Straße in Kontakt zu kommen, wobei dieser Streifen mindestens einen Einschnitt (5) enthält, der sich in einer Hauptrichtung D erstreckt und eine mittlere Breite E hat, wobei dieser Laufstreifen außerdem mindestens einen Einsatz (4) enthält, der gemäß einer anderen als der Hauptrichtung D des Einschnitts ausgerichtet ist, wobei dieser Einsatz (4) ganz in der Dicke des Streifens angeordnet ist, um sich radial innerhalb eines Einschnittteils (5F) geringer Tiefe HF zu befinden, wobei dieser Laufstreifen **dadurch gekennzeichnet ist, dass** dieser Einschnitt (5) in der Hauptrichtung D mindestens einen Einschnittteil (5F) geringer Tiefe HF und mindestens einen Einschnittteil (5G) großer Tiefe HG enthält, wobei die Tiefe HF kleiner als die Tiefe HG ist, wobei jeder Einschnittteil (5F) geringer Tiefe und jeder Einschnittteil (5G) großer Tiefe einen Endbereich enthält, und dass mindestens der Einschnittteil (5F) geringer Tiefe HF, der sich radial außerhalb des Einsatzes befindet, in seinem Endbereich mit einer Verbreiterung versehen ist, die einen Kanal (6) maximaler Breite W bildet, wobei diese maximale Breite W größer als die mittlere Breite E des Einschnitts ist.

2. Laufstreifen für einen Reifen nach Anspruch 1 und bei dem die maximale Breite W des Kanals (6) mindestens gleich dem Dreifachen der mittleren Breite des Einschnitts ist.

3. Laufstreifen für einen Reifen nach Anspruch 1 oder Anspruch 2 und bei dem der Einschnitt (5) einen Teil (5F) verringerter Tiefe HF enthält, der in der Hauptrichtung D von Teilen (5G) größerer Tiefe HG umrahmt ist.

4. Laufstreifen für einen Reifen nach Anspruch 3 und bei dem alle Einschnitte (5), die radial einen Einsatz (4) überlagern, mit einem Kanal (6) mittlerer Breite W in ihren Endbereichen versehen sind, die am weitesten innerhalb des Laufstreifens liegen.

5. Laufstreifen für einen Reifen nach einem der Ansprüche 1 bis 4 und bei dem der Kanal (6) im Schnitt gesehen eine abgestumpfte Kreisform hat, um einen Kanalboden ebener Geometrie zu bilden, wobei dieser Kanalboden der Teil des Kanals ist, der am weitesten von der Lauffläche (20) entfernt ist.

6. Laufstreifen für einen Reifen nach Anspruch 5 und bei dem es eine Gummidicke A ungleich Null zwischen dem Einschnittteil (5F) verringerter Tiefe und dem unter dem Einschnittteil verlaufenden Einsatz (4) gibt, wobei diese Gummidicke mindestens gleich der Breite E des Einschnitts (5) ist.

## Claims

1. Tyre tread (1) comprising a tread surface (20) intended to come into contact with a roadway, this tread comprising at least one sipe (5) extending in a main direction D and of mean width E, this tread further comprising at least one insert (4) oriented in a direction different from the main direction D of the sipe, this insert (4) being positioned wholly within the thickness of the tread so as to be situated radially on the inside of a part sipe (5F) of shallow depth HF, this tread being **characterized in that** this sipe (5) comprises in the main direction D at least one part sipe (5F) of shallow depth HF and at least one part sipe (5G) of great depth HG, the depth HF being less than the depth HG, each part sipe (5F) of shallow depth and each part sipe (5G) of great depth comprising an end region, and **in that** at least the part sipe (5F) of shallow depth HF situated radially on the outside of the insert is provided, at its end region, with a widening forming a channel (6) of maximum width W, this maximum width W being greater than the mean width E of the sipe.

2. Tyre tread according to Claim 1 and in which the maximum width W of the channel (6) is at least equal to three times the mean width of the sipe.

3. Tyre tread according to Claim 1 or Claim 2 and in which the sipe (5) comprises a part (5F) of reduced depth HF flanked in the main direction D by parts (5G) of greater depth HG.

4. Tyre tread according to Claim 3 and in which all the sipes (5) radially surmounting an insert (4) are provided with a channel (6) of mean width W in their end regions furthest towards the inside of the tread.

5. Tyre tread according to one of Claims 1 to 4 and in which the channel (6) when viewed in cross section has a circular shape which is truncated to form a channel bottom with flat geometry, this channel bottom being the part of the channel furthest from the tread surface (20).

6. Tyre tread according to Claim 5 and in which there is a thickness A of rubber other than zero between the part sipe (5F) of reduced depth and the insert (4) running under said part sipe, this thickness of rubber being at least equal to the width E of the sipe (5).
